(19)

Europäisches
Patentamt
European
Patent Office
Office européen
des brevets

(11) **EP 4 276 071 A1**

(12) **EUROPEAN PATENT APPLICATION**
published in accordance with Art. 153(4) EPC

(43) Date of publication:
**15.11.2023 Bulletin 2023/46**

(21) Application number: **21917572.6**

(22) Date of filing: **09.11.2021**

(51) International Patent Classification (IPC):
**C01G 53/00** (2006.01)      **H01M 4/505** (2010.01)
**H01M 4/525** (2010.01)

(52) Cooperative Patent Classification (CPC):
**C01G 53/00; H01M 4/505; H01M 4/525**

(86) International application number:
**PCT/JP2021/041196**

(87) International publication number:
**WO 2022/149347 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.01.2021   JP 2021002419**

(71) Applicant: **Tanaka Chemical Corporation
Fukui-shi, Fukui 910-3131 (JP)**

(72) Inventors:
- **IIDA, Yasutaka
  Fukui-shi, Fukui 910-3131 (JP)**
- **MASUKAWA, Takaaki
  Fukui-shi, Fukui 910-3131 (JP)**
- **KATAGIRI, Kazuki
  Fukui-shi, Fukui 910-3131 (JP)**

(74) Representative: **Weickmann & Weickmann
PartmbB
Postfach 860 820
81635 München (DE)**

(54) **NICKEL-CONTAINING HYDROXIDE, POSITIVE ELECTRODE ACTIVE MATERIAL HAVING NICKEL-CONTAINING HYDROXIDE AS PRECURSOR, AND METHOD FOR PRODUCING NICKEL-CONTAINING HYDROXIDE**

(57)    Provided is a nickel-containing hydroxide capable of obtaining a positive electrode active material having excellent initial charge-discharge efficiency and a high volume capacity density. The nickel-containing hydroxide for a precursor of a positive electrode active material of a non-aqueous electrolyte secondary battery, wherein when a peak intensity of a diffraction peak appearing in the range of $2\theta = 19.2 \pm 1$ in powder X-ray diffraction measurement using CuK$\alpha$ rays is defined as $\alpha$, and a peak intensity of a diffraction peak appearing in the range of $2\theta = 38.5 \pm 1$ in powder X-ray diffraction measurement using CuK$\alpha$ rays is defined as $\beta$, the peak intensity ratio of $\alpha/\beta$ is 0.80 or more and 1.38 or less, and the average long diameter of primary particles is 290 nm or more and 425 nm or less.

EP 4 276 071 A1

## Description

Technical Field

The present invention relates to a nickel-containing hydroxide, a positive electrode active material using a nickel-containing hydroxide as a precursor, and a method for producing a nickel-containing hydroxide, and particularly relates to a nickel-containing hydroxide capable of obtaining a positive electrode active material having excellent initial charge-discharge efficiency and a high volume capacity density, and a method for producing a nickel-containing hydroxide.

Background Art

In recent years, from the viewpoint of reducing the environmental load, secondary batteries have been used in a wide range of fields such as mobile devices and vehicles that use electricity or combine it for use as a power source. Examples of the secondary batteries include a secondary battery using a non-aqueous electrolyte such as a lithium ion secondary battery. The secondary battery using a non-aqueous electrolyte such as the lithium ion secondary battery is suitable for miniaturization and weight reduction, and has characteristics such as a high utilization ratio and high cycle characteristics.

In order to improve battery characteristics of a lithium ion secondary battery, excellent reactivity with a lithium compound is required for the nickel-containing hydroxide for a precursor of a positive electrode active material. For the precursor of a positive electrode active material capable of obtaining excellent reactivity with a lithium compound, a nickel-cobalt-manganese composite hydroxide having a specific surface area of 3.0 to 11.0 $m^2/g$ and a ratio of a peak intensity (101) on a (101) plane to a peak intensity (100) on a (100) plane (101)/(100) in X-ray diffraction measurement of less than 0.300 is proposed (Patent Literature 1).

However, for electric cars that use electricity as a power source or hybrid cars that use electricity in combination as a power source, a characteristic of large charge-discharge capacity, particularly as a secondary battery as a power source, is required. However, the precursor of a positive electrode active material in Patent Literature 1, despite being capable of obtaining excellent reactivity with a lithium compound, had room for improvement in improving the charge-discharge capacity of a secondary battery.

Document List

Patent Literature

Patent Literature 1: Japanese Patent Application Publication No. 2015-003838

Summary of Invention

Technical Problem

In view of the above circumstances, it is an object of the present invention to provide a nickel-containing hydroxide capable of obtaining a positive electrode active material having excellent initial charge-discharge efficiency and a high volume capacity density, and a method for producing a nickel-containing hydroxide.

Solution to Problem

In the nickel-containing hydroxide of the present invention, a ratio of a peak intensity of a diffraction peak appearing in the range of $2\Theta = 19.2 \pm 1$ to a peak intensity of a diffraction peak appearing in the range of $2\Theta = 38.5 \pm 1$ in powder X-ray diffraction measurement using CuK$\alpha$ rays is adjusted to a predetermined range.

The gist of constitution of the present invention is as follows:

[1] A nickel-containing hydroxide for a precursor of a positive electrode active material of a non-aqueous electrolyte secondary battery,
wherein when a peak intensity of a diffraction peak appearing in the range of $2\Theta = 19.2 \pm 1$ in powder X-ray diffraction measurement using CuK$\alpha$ rays is defined as $\alpha$, and a peak intensity of a diffraction peak appearing in the range of $2\Theta = 38.5 \pm 1$ in powder X-ray diffraction measurement using CuK$\alpha$ rays is defined as $\beta$, a peak intensity ratio of $\alpha/\beta$ is 0.80 or more and 1.38 or less.
[2] The nickel-containing hydroxide according to [1], wherein the peak intensity ratio of $\alpha/\beta$ is 1.05 or more and 1.38 or less.

[3] The nickel-containing hydroxide according to [1] or [2], wherein an average long diameter of primary particles is 290 nm or more and 425 nm or less.

[4] The nickel-containing hydroxide according to any one of [1] to [3], wherein an aspect ratio of primary particles is 2.2 or more and 5.0 or less.

[5] The nickel-containing hydroxide according to any one of [1] to [4], wherein nickel is contained in 80 mol% or more relative to the total amount of contained metals.

[6] The nickel-containing hydroxide according to any one of [1] to [5], being a composite hydroxide comprising nickel and at least one species of metal selected from the group consisting of cobalt and manganese.

[7] The nickel-containing hydroxide according to any one of [1] to [6], wherein a tap density is 1.60 or more.

[8] The nickel-containing hydroxide according to any one of [1] to [7], wherein a BET specific surface area is 7.5 $m^2/g$ or more and 20.0 $m^2/g$ or less.

[9] A positive electrode active material of a non-aqueous electrolyte secondary battery, wherein the nickel-containing hydroxide according to any one of [1] to [8] is calcined with a lithium compound.

[10] A method for producing a nickel-containing hydroxide for a precursor of a positive electrode active material of a non-aqueous electrolyte secondary battery, comprising:

a crystallization step of adding and mixing an aqueous solution containing a nickel salt and an aqueous solution containing a complexing agent in a reaction vessel, and performing coprecipitation reaction in the reaction solution by supplying a pH adjuster to the reaction solution in the reaction vessel so that pH of the reaction solution in the reaction vessel is maintained in the range of 10 or more and 13 or less based on a liquid temperature of 40°C to obtain nickel-containing hydroxide particles; and

when a reaction temperature of the reaction solution in the crystallization step is A (°C), a complexing agent concentration of the reaction solution is B (g/L), residence time of the nickel-containing hydroxide particles in the reaction vessel is C (hour), and an agitation power when mixing the reaction solution in the reaction vessel is D (kW/m$^3$), a value of A $\times$ B $\times$ C $\times$ D is 3400 or more and 7000 or less.

[11] The method for producing a nickel-containing hydroxide according to [10], wherein the reaction temperature A is 60°C or higher and 90°C or lower.

[12] The method for producing a nickel-containing hydroxide according to [10] or [11], wherein the complexing agent is an ammonium ion donor, and an ammonium concentration of the reaction solution B is 1.0 g/L or more and 10.0 g/L or less.

[13] The method for producing a nickel-containing hydroxide according to any one of [10] to [12], wherein the residence time C is 5 hours or longer and 30 hours or shorter.

[14] The method for producing a nickel-containing hydroxide according to any one of [10] to [13], wherein the agitation power D is 1.0 kW/m$^3$ or more and 5.0 kW/m$^3$ or less.

[15] The method for producing a nickel-containing hydroxide according to any one of [10] to [14], wherein the reaction vessel is a continuous reactor.

[16] The method for producing a nickel-containing hydroxide according to any one of [10] to [15], further comprising a solid-liquid separation step of washing the nickel-containing hydroxide particles obtained in the crystallization step with an alkaline aqueous solution and then subjecting the resultant to solid-liquid separation.

As used herein, the "peak intensity of a diffraction peak appearing in the range of $2\Theta = 19.2 \pm 1$ in powder X-ray diffraction measurement" and the "peak intensity of a diffraction peak appearing in the range of $2\Theta = 38.5 \pm 1$ in powder X-ray diffraction measurement" refer to the peak intensities each obtained by subjecting a nickel-containing hydroxide powder to measurement by using a CuK$\alpha$ radiation source (40 kV/40 mA) under the conditions of a diffraction angle of $2\Theta = 10°$ to $80°$, a sampling width of $0.03°$, and a scan speed of $20°$/min, to obtain a powder X-ray diffraction pattern, and subjecting the resultant to smoothing processing and background removal processing by using an integrated powder X-ray analysis software PDXL.

Effects of Invention

According to the nickel-containing hydroxide of the present invention, when a peak intensity of a diffraction peak appearing in the range of $2\theta = 19.2 \pm 1$ in powder X-ray diffraction measurement using CuK$\alpha$ rays is defined as $\alpha$, and a peak intensity of a diffraction peak appearing in the range of $2\theta = 38.5 \pm 1$ in powder X-ray diffraction measurement using CuK$\alpha$ rays is defined as $\beta$, a peak intensity ratio represented by $\alpha/\beta$ is 0.80 or more and 1.38 or less, whereby a positive electrode active material having excellent initial charge-discharge efficiency and a high volume capacity density can be obtained.

According to the nickel-containing hydroxide of the present invention, the peak intensity ratio of $\alpha/\beta$ is 1.05 or more and 1.38 or less, thereby further improving initial charge-discharge efficiency and a volume capacity density.

According to the nickel-containing hydroxide of the present invention, the average long diameter of primary particles is 290 nm or more and 425 nm or less, thereby further ensuring excellent initial charge-discharge efficiency and a high volume capacity density.

According to the nickel-containing hydroxide of the present invention, the aspect ratio of primary particles is 2.2 or more and 5.0 or less, thereby further ensuring excellent initial charge-discharge efficiency and a high volume capacity density.

According to the nickel-containing hydroxide of the present invention, the tap density is 1.60 or more, thereby improving a filling density of a positive electrode active material and thus capable of obtaining a high volume capacity density.

According to the method for producing a nickel-containing hydroxide of the present invention, when the reaction temperature of the reaction solution in the crystallization step is A (°C), the complexing agent concentration of the reaction solution is B (g/L), the residence time of the nickel-containing hydroxide particles in the reaction vessel is C (hour), and the agitation power when mixing the reaction solution in the reaction vessel is D (kW/m$^3$), a value of A $\times$ B $\times$ C $\times$ D is 3400 or more and 7000 or less, whereby a precursor of a positive electrode active material capable of preparing a positive electrode active material having excellent initial charge-discharge efficiency and a high volume capacity density can be obtained.

Description of Embodiments

Hereinafter, the nickel-containing hydroxide for a precursor of a positive electrode active material of a non-aqueous electrolyte secondary battery of the present invention will be described in detail. The nickel-containing hydroxide of the present invention is a secondary particle formed by aggregation of a plurality of primary particles. A particle shape of the nickel-containing hydroxide of the present invention is not particularly limited and has a wide variety of shapes, and examples thereof can include a substantially spherical shape and a substantially elliptical shape.

In the nickel-containing hydroxide of the present invention, when a peak intensity of a diffraction peak appearing in the range of $2\Theta = 19.2 \pm 1$ in powder X-ray diffraction measurement using CuK$\alpha$ rays is defined as $\alpha$, and similarly a peak intensity of a diffraction peak appearing in the range of $2\theta = 38.5 \pm 1$ in powder X-ray diffraction measurement using CuK$\alpha$ rays is defined as $\beta$, a value of $\alpha/\beta$, which is a ratio of the peak intensity $\alpha$ to the peak intensity $\beta$, is 0.80 or more and 1.38 or less.

The nickel-containing hydroxide of the present invention with the peak intensity ratio represented by $\alpha/\beta$ being 0.80 or more and 1.38 or less enables to obtain nickel-containing hydroxide particles with a high tap density and to achieve homogeneous synthesis when the nickel-containing hydroxide is mixed and calcined with a lithium compound due to moderate orientation as a crystal structure. From the above, the nickel-containing hydroxide can contribute to the obtention of a positive electrode active material having excellent initial charge-discharge efficiency and a high volume capacity density. Therefore, when the nickel-containing hydroxide of the present invention is used as a precursor for a positive electrode active material, a battery characteristic of high charge-discharge capacity can be achieved thereby improving an energy density of a secondary battery.

The diffraction peak of peak intensity $\alpha$ is considered to derive from a crystal structure of nickel-containing hydroxide, and the diffraction peak of peak intensity $\beta$ is also considered to derive from the crystal structure of nickel-containing hydroxide. The peak intensity ratio represented by $\alpha/\beta$ is considered to be relevant to the orientation of the crystal structure of the nickel-containing hydroxide.

A peak intensity ratio represented by $\alpha/\beta$ is not particularly limited as long as it is 0.80 or more and 1.38 or less, however the lower limit value of the peak intensity ratio represented by $\alpha/\beta$ is preferably 0.85, more preferably 0.95, further preferably 1.00, and particularly preferably 1.05, from the viewpoint of further improving the initial charge-discharge efficiency and volume capacity density. The upper limit value of the peak intensity ratio represented by $\alpha/\beta$ is, on the other hand, preferably 1.37 and particularly preferably 1.36 from the viewpoint of ensuring excellent initial charge-discharge efficiency and a high volume capacity density. It is noted that the above upper limit values and lower limit values can be arbitrarily combined.

An average long diameter of primary particles of the nickel-containing hydroxide of the present invention is not particularly limited, but the average long diameter of primary particles is preferably 290 nm or more and 425 nm or less. When an average long diameter of primary particles is 290 nm or more and 425 nm or less, the nickel-containing hydroxide can contribute to the obtention of a positive electrode active material having further excellent initial charge-discharge efficiency and a high volume capacity density. In other words, the nickel-containing hydroxide of the present invention has a peak intensity ratio represented by $\alpha/\beta$ of 0.80 or more and 1.38 or less and has an average long diameter of primary particles of 290 nm or more and 425 nm or less, whereby a positive electrode active material having further excellent initial charge-discharge efficiency and a high volume capacity density can be obtained when the nickel-containing hydroxide is used as the precursor of a positive electrode active material of a non-aqueous electrolyte secondary battery.

A shape of primary particles of the nickel-containing hydroxide of the present invention is not particularly limited, and examples include plate shapes, columnar shapes, and needle shapes. Further, the average long diameter of primary particles of the nickel-containing hydroxide of the present invention is preferably in the range of 290 nm or more and 425 nm or less, while the lower limit value of average long diameter of primary particles is more preferably 300 nm, and particularly preferably 310 nm, from the viewpoint of ensuring further excellent initial charge-discharge efficiency and a high volume capacity density. The upper limit value of average long diameter of primary particles, on the other hand, is more preferably 423 nm, and particularly preferably 420 nm, from the viewpoint of ensuring further excellent initial charge-discharge efficiency and a high volume capacity density. It is noted that the above upper limit values and lower limit values can be arbitrarily combined.

In the nickel-containing hydroxide of the present invention, the average long diameter of primary particles means an average long diameter that is determined by obtaining a secondary particle image using scanning electron microscopy (SEM), selecting from the obtained image secondary particles with a particle diameter having a cumulative volume percentage of 50%, as measured by a particle size distribution measuring apparatus using a laser diffraction/scattering method, randomly selecting 50 primary particles on the surface of the secondary particles, and measuring the long diameters of primary particles and calculating the average.

In the nickel-containing hydroxide of the present invention, an aspect ratio of primary particles is not particularly limited. The lower limit value of the aspect ratio of primary particles is preferably 2.2, more preferably 2.5, and particularly preferably 3.0, from the viewpoint of further ensuring excellent initial charge-discharge efficiency and a high volume capacity density. The upper limit value of the aspect ratio of primary particles, on the other hand, is preferably 5.0, more preferably 4.8, and particularly preferably 4.7, from the viewpoint of further ensuring excellent initial charge-discharge efficiency and a high volume capacity density. It is noted that the above upper limit values and lower limit values can be arbitrarily combined.

In the nickel-containing hydroxide of the present invention, the aspect ratio of primary particles means the aspect ratio obtained by obtaining a secondary particle image using a scanning electron microscope (SEM), from the obtained image, selecting secondary particles with a particle diameter having a cumulative volume percentage of 50% by volume when the particle diameter of secondary particles is measured by a particle size distribution measuring apparatus using a laser diffraction/scattering method, randomly selecting 50 primary particles on the surface of the secondary particles, measuring and averaging long diameters and short diameters of the primary particles respectively, and calculating by dividing the average long diameter by the average short diameter.

A composition of the nickel-containing hydroxide of the present invention is not particularly limited as long as a hydroxide contains nickel (Ni). A nickel content of the nickel-containing hydroxide of the present invention is not particularly limited, while the lower limit value thereof is preferably 80 mol%, and particularly preferably 82 mol%, relative to the total amount of contained metals, from the viewpoint of enabling raw material cost to be reduced, while obtaining a positive electrode active material with improved various characteristics such as a high utilization ratio, high cycle characteristics, and charge-discharge efficiency. The upper limit value of the nickel content is, on the other hand, 100 mol% relative to the total amount of contained metals, and is preferably 95 mol%, and particularly preferably 90 mol%, from the viewpoint of ensuring a positive electrode active material with improved various characteristics such as a high utilization ratio, high cycle characteristics, and charge-discharge efficiency. It is noted that the above upper limit values and lower limit values can be arbitrarily combined.

The composition of the nickel-containing hydroxide of the present invention can be a composite hydroxide containing, for example, nickel (Ni) and at least one species of metal selected from the group consisting of cobalt (Co) and manganese (Mn). Specific composition of the nickel-containing hydroxide of the present invention is, for example, a nickel-containing hydroxide in which a molar ratio of Ni : Co : Mn : M is represented by $1-x-y-z : x : y : z$ (where $0 \leq x \leq 0.15$, $0 \leq y \leq 0.15$, $0 \leq z \leq 0.05$, and M represents one or more additive elements selected from the group consisting of Al, Fe, Ti, Mg, Ca, Sr, Ba, V, Nb, Cr, Mo, W, Ru, Cu, Zn, B, Ga, Si, Sn, P, Bi, and Zr).

A particle diameter of the nickel-containing hydroxide of the present invention is not particularly limited, but for example, the lower limit value of the secondary particle diameter having a cumulative volume percentage of 50% by volume (hereinafter, may be simply referred to as "D50") is preferably 6.0 $\mu$m and particularly preferably 7.0 $\mu$m, from the viewpoint of improving the loading density of the positive electrode active material on the positive electrode. On the other hand, the upper limit value of D50 of the nickel-containing hydroxide of the present invention is preferably 20.0 $\mu$m, more preferably 15.0 $\mu$m, and particularly preferably 13.0 $\mu$m from the viewpoint of improving the contactability with the electrolyte. The D50 described above means the particle diameter measured by a particle size distribution measuring apparatus using a laser diffraction/scattering method. It is noted that the above upper limit values and lower limit values can be arbitrarily combined.

A tap density (TD) of the nickel-containing hydroxide of the present invention is not particularly limited, but for example, the lower limit value of the tap density (TD) is preferably 1.60 g/ml, more preferably 1.80 g/ml, and particularly preferably 2.00 g/ml, from the viewpoint of improving productivity of the positive electrode active material and improving a filling degree of the positive electrode active material in the positive electrode thereby obtaining a higher volume capacity density of a battery. On the other hand, the upper limit value of the tap density (TD) of the nickel-containing hydroxide of the present invention is preferably 2.40 g/ml and particularly preferably 2.30 g/ml, for example, from the viewpoint of improving the contactability between the positive electrode active material and the non-aqueous electrolyte. It is noted that the above upper limit values and lower limit values can be arbitrarily combined.

A BET specific surface area of the nickel-containing hydroxide of the present invention is not particularly limited, but for example, the lower limit value of the BET specific surface area is preferably 6.0 $m^2/g$ and particularly preferably 7.5 $m^2/g$ from the viewpoint of improving the filling degree of the positive electrode active material in the positive electrode and a contact area with the non-aqueous electrolyte, while contributing to the improvement in initial charge-discharge efficiency and volume capacity density. On the other hand, the upper limit value of the BET specific surface area of the nickel-containing hydroxide of the present invention is preferably 20.0 $m^2/g$, more preferably 15.0 $m^2/g$, and particularly preferably 11.0 $m^2/g$ from the viewpoint of improving a crush strength of the positive electrode active material, while contributing to the improvement in initial charge-discharge efficiency and volume capacity density. It is noted that the above upper limit values and lower limit values can be arbitrarily combined.

Next, the method for producing a nickel-containing hydroxide of the present invention will be described. The method for producing a nickel-containing hydroxide of the present invention includes a crystallization step. The crystallization step is a step of adding and mixing an aqueous solution containing a nickel salt and an aqueous solution containing a complexing agent in a reaction vessel, and performing coprecipitation reaction in the reaction solution by supplying a pH adjuster to the reaction solution in the reaction vessel so that pH of the reaction solution in the reaction vessel is maintained in the range of 10 or more and 13 or less based on the liquid temperature of 40°C to obtain nickel-containing hydroxide particles.

Specifically, a complexing agent and a pH adjuster are appropriately added to a solution containing a nickel salt (for example, a sulfate), optionally a cobalt salt (for example, a sulfate), a manganese salt (for example, a sulfate) and a salt of an additive element M (for example, a sulfate), neutralized and crystallized in the reaction vessel by a coprecipitation method to prepare nickel-containing hydroxide particles, and to obtain a slurry suspension containing the nickel-containing hydroxide particles. A solvent of the suspension that is, for example, water is used.

The complexing agent is not particularly limited as long as it can form a complex with a nickel ion (optionally, a cobalt ion, and a manganese ion, an additive element M ion) in an aqueous solution, and includes, for example, an ammonium ion donor. The ammonium ion donor includes, for example, ammonium sulfate, ammonium chloride, ammonium carbonate, and ammonium fluoride. In the coprecipitation reaction, a pH adjuster is appropriately added in order to adjust a pH value of the aqueous solution as described above. The pH adjuster includes an alkali metal hydroxide (for example, sodium hydroxide and potassium hydroxide).

When the pH adjuster and the complexing agent are appropriately supplied to a metal salt solution containing the nickel in a reaction vessel and the reaction solution in the reaction vessel is appropriately stirred, the metals (nickel and the like) in the metal salt solution coprecipitate by the neutralization reaction thereby crystallizing nickel-containing hydroxide particles. In crystallization of the nickel-containing hydroxide particles by the neutralization reaction, when the reaction temperature of the reaction solution in the reaction vessel is A (°C), the complexing agent concentration of the reaction solution in the reaction vessel is B (g/L), the residence time of the nickel-containing hydroxide particles in the reaction vessel is C (hour), and the agitation power when mixing the reaction solution in the reaction vessel is D ($kW/m^3$), reaction conditions for the crystallization step are set so that the value of A × B × C × D is 3400 or more and 7000 or less.

In other words, the reaction conditions for the crystallization step are set so that the relation in the following formula (1) is satisfied.

$$3400 \leq A \times B \times C \times D \leq 7000 \qquad \cdots (1)$$

When the reaction conditions for the crystallization step are set as described above, the nickel-containing hydroxide having the peak intensity ratio of $\alpha/\beta$ of 0.80 or more and 1.38 or less can be obtained. Therefore, in the method for producing a nickel-containing hydroxide of the present invention, the precursor for a positive electrode active material capable of preparing the positive electrode active material having excellent initial charge-discharge efficiency and a high volume capacity density can be obtained.

The reaction temperature of the reaction solution in the reaction vessel A (°C), the complexing agent concentration of the reaction solution in the reaction vessel B (g/L), the residence time of the nickel-containing hydroxide particles in the reaction vessel C (hour), and the agitation power when mixing the reaction solution in the reaction vessel D ($kW/m^3$) are the major reaction conditions for the crystallization step, and the value of A × B × C × D affects the state of crystallization of the nickel-containing hydroxide, and when the value of A × B × C × D is set to the predetermined range, the crystal structure of the nickel-containing hydroxide can be uniformized. It is noted that the reaction temperature A, the complexing agent concentration of the reaction solution in the reaction vessel B, the residence time of the nickel-containing hydroxide particles in the reaction vessel C, and the agitation power when mixing the reaction solution in the reaction vessel D demonstrate in their own synergistic effects in the crystallization reaction of the nickel-containing hydroxide, and thus in the formula (1) each of the elements A, B, C and D is multiplied by each other.

A value of A × B × C × D is not particularly limited as long as it is 3400 or more and 7000 or less, but the lower limit value of the value of A × B × C × D is preferably 4200, more preferably 4500, and particularly preferably 5000 from the viewpoint of obtaining the precursor of a positive electrode active material having further excellent initial charge-discharge efficiency and a high volume capacity density. On the other hand, the upper limit value of the value of A × B × C × D is preferably 6500, and particularly preferably 6000 from the viewpoint of ensuring the precursor of a positive electrode active material having excellent initial charge-discharge efficiency and a high volume capacity density. It is noted that the above upper limit values and lower limit values can be arbitrarily combined.

A reaction temperature of the reaction solution in the reaction vessel A is not particularly limited as long as a value of A × B × C × D is 3400 or more and 7000 or less, but the lower limit value of the reaction temperature A is preferably 60°C, and particularly preferably 65°C to insure a desirable average long diameter of primary particles and a peak intensity ratio α/β of 0.80 or more and 1.38 or less from the viewpoint of crystallization. On the other hand, the upper limit value of the reaction temperature A is preferably 90°C, and particularly preferably 85°C from the viewpoint of ensuring the peak intensity ratio α/β of 0.80 or more and 1.38 or less, and water loss in the reaction vessel and retaining the complexing agent component in the reaction slurry. It is noted that the above upper limit values and lower limit values can be arbitrarily combined.

An ammonia concentration of the reaction solution B is not particularly limited as long as a value of A × B × C × D is 3400 or more and 7000 or less, but the lower limit value of the ammonia concentration B is preferably 1.0 g/L, and particularly preferably 1.5 g/L from the viewpoint of improving a tap density of the secondary particles, while ensuring the peak intensity ratio α/β of 0.80 or more and 1.38 or less. On the other hand, the upper limit value of the ammonia concentration B is preferably 10.0 g/L, and particularly preferably 8.0 g/L from the viewpoint of inhibiting an increase in the primary particle average short diameter from the crystallization perspective thereby obtaining a desired aspect ratio, while ensuring the peak intensity ratio α/β of 0.80 or more and 1.38 or less. It is noted that the above upper limit values and lower limit values can be arbitrarily combined.

The residence time of the nickel-containing hydroxide particles in the reaction vessel C is not particularly limited as long as a value of A × B × C × D is 3400 or more and 7000 or less, but the lower limit value of the residence time C is preferably 5 hours, and particularly preferably 7 hours from the viewpoint of improving a tap density of the secondary particles, while ensuring the peak intensity ratio α/β of 0.80 or more and 1.38 or less. On the other hand, the upper limit value of the residence time C is preferably 30 hours, and particularly preferably 25 hours from the viewpoint of achieving high industrial productivity, while ensuring the peak intensity ratio α/β of 0.80 or more and 1.38 or less. It is noted that the above upper limit values and lower limit values can be arbitrarily combined.

The agitation power when mixing the reaction solution in the reaction vessel D is not particularly limited as long as a value of A × B × C × D is 3400 or more and 7000 or less, but the lower limit value of the agitation power D is preferably 1.0 kW/m$^3$, and particularly preferably 1.5 kW/m$^3$ from the viewpoint of achieving dispersibility of the liquid to be charged in the reaction vessel, while ensuring the peak intensity ratio α/β of 0.80 or more and 1.38 or less. On the other hand, the upper limit value of the agitation power D is preferably 5.0 kW/m$^3$, and particularly preferably 4.0 kW/m$^3$ from the viewpoint of inhibiting the secondary particles from excessively being refined by the shear of stirring blades, while ensuring the peak intensity ratio α/β of 0.80 or more and 1.38 or less. It is noted that the above upper limit values and lower limit values can be arbitrarily combined.

The reaction vessel used in the method for producing a nickel - containing hydroxide of the present invention can include, for example, a continuous reactor that overflows the obtained nickel-containing hydroxide particles to separate it, and a batch type reactor that does not discharge nickel-containing hydroxide particles to an outside of the system until a reaction is completed.

As described above, the nickel-containing hydroxide particles obtained in the crystallization step are filtered from the suspension and then washed with an alkaline aqueous solution to remove impurities included in the nickel-containing hydroxide particles, and to enable the nickel-containing hydroxide of the present invention to be obtained. Then, the solid phase and the liquid phase are separated in the solid-liquid separation step, the solid phase containing the nickel-containing hydroxide is optionally washed with water, and the nickel-containing hydroxide is heat-treated and dried to enable a powdery nickel-containing hydroxide to be obtained.

Next, the positive electrode active material of a non-aqueous electrolyte secondary battery using the nickel-containing hydroxide of the present invention as the precursor (hereinafter, may be simply referred to as the "positive electrode active material of the present invention") will be described. The positive electrode active material of the present invention is an aspect such that the nickel-containing hydroxide of the present invention that is the precursor, has been calcined with, for example, a lithium compound. A crystal structure of the positive electrode active material of the present invention is a layered structure, and is preferably a trigonal crystal structure, a hexagonal crystal structure, or a monoclinic crystal structure in order to obtain a secondary battery having a high discharge capacity. The positive electrode active material of the present invention can be used, for example, as the positive electrode active material of a non-aqueous electrolyte secondary battery such as a lithium ion secondary battery.

When producing the positive electrode active material of the present invention, a step of preparing the nickel-containing hydroxide into the nickel-containing oxide may be carried out as pretreatment, and the nickel-containing oxide may be used as the precursor. The method for preparing the nickel-containing oxide from the nickel-containing hydroxide can include an oxidation treatment of calcining the nickel-containing hydroxide at a temperature of 300°C or higher and 800°C or lower for 1 hour or longer and 10 hours or shorter in an atmosphere where an oxygen gas is present.

Next, the method for producing the positive electrode active material of the present invention will be described. For example, the method for producing the positive electrode active material of the present invention is a method for first adding a lithium compound to the nickel-containing hydroxide (or the nickel-containing oxide) to prepare a mixture of the nickel-containing hydroxide (or the nickel-containing oxide) and the lithium compound. The lithium compound is not particularly limited as long as it is a compound having lithium, and can include, for example, lithium carbonate and lithium hydroxide.

Next, the positive electrode active material can be produced by calcining the obtained mixture. The calcination conditions include, for example, the calcination temperature of 600°C or higher and 1000°C or lower, the rate of temperature rise of 50°C/h or more and 300°C/h or less, and a calcination time of 5 hours or longer and 20 hours or shorter. The calcination atmosphere is not particularly limited, and includes, for example, the atmosphere and oxygen. Moreover, a calcination furnace used for calcination is not particularly limited and includes, for example, a stationary box furnace and a roller hearth continuous furnace.

Next, the positive electrode using the positive electrode active material of the present invention will be described. The positive electrode comprises a positive electrode current collector and a positive electrode active material layer formed on the surface of the positive electrode current collector by using the positive electrode active material of the present invention. The positive electrode active material layer has the positive electrode active material of the present invention, a binder, and optionally a conductive auxiliary agent. The conductive auxiliary agent is not particularly limited as long as it can be used for a non-aqueous electrolyte secondary battery, and for example, a carbon-based material can be used. The carbon-based material can include graphite powder, carbon black (for example, acetylene black), and a fibrous carbon material. The binder is not particularly limited, and can include, for example, polymer resins such as polyvinylidene difluoride (PVdF), butadiene rubber (BR), polyvinyl alcohol (PVA), carboxymethyl cellulose (CMC), and polytetrafluoroethylene (PTFE), and combinations thereof. The positive electrode current collector is not particularly limited, but for example, a belt-shaped member made of a metal material such as Al, Ni, or stainless steel can be used. A member such that Al is used as a forming material and processed into a thin film, is preferable in terms of facilitation of processing and a low price among them.

The method for producing the positive electrode is, for example, a method for first preparing a positive electrode active material slurry by mixing the positive electrode active material of the present invention, the conductive auxiliary agent, and the binder. Next, the positive electrode current collector is coated with the aforementioned positive electrode active material slurry by a known filling method, dried, pressed and fixed to enable a positive electrode to be obtained.

The positive electrode thus obtained as described above by using the positive electrode active material, a negative electrode having a negative electrode current collector and a negative electrode active material layer containing a negative electrode active material formed on the surface of the negative electrode current collector, an electrolytic solution containing a predetermined electrolyte, and a separator, are loaded by a known method to enable a non-aqueous electrolyte secondary battery to be assembled.

The electrolyte contained in the non-aqueous electrolyte includes $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB where BOB refers to bis(oxalato)borate, LiFSI where FSI refers to bis(fluorosulfonyl) imide, lithium salts such as a lower aliphatic carboxylic acid lithium salt and $LiAlCl_4$. They may be used alone or in combination of two or more.

Moreover, dispersing media for the electrolyte include, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy) ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide, and N,N-dimethylacetamide; carbamates such as 3-methyl-2-oxazolidone; sulfur-containing compounds such as sulfolane, dimethyl sulfoxide, and 1,3-propanesultone, or solvents such that a fluoro group is further introduced into these organic solvents (one or more of hydrogen atoms of the organic solvent are substituted with fluorine atoms), can be used. They may be used alone or in combination of two or more.

Further, a solid electrolyte may be used instead of the electrolytic solution containing the electrolyte. As the solid electrolyte, for example, an organic polymer electrolyte such as a polyethylene oxide-based polymer compound or a polymer compound containing at least one or more of a polyorganosiloxane chain or a polyoxyalkylene chain, can be used. Moreover, a so-called gel type compound in which a non-aqueous electrolytic solution is retained in a polymer compound, can also be used. Further, it includes inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$. They may be used alone or in combination of two or more.

Examples of the separator includes members in forms such as a porous film, a non-woven fabric, and a woven fabric, having a material such as a polyolefin resin such as polyethylene or polypropylene, a fluororesin, or a nitrogen-containing aromatic polymer.

Example

Next, examples of the nickel-containing hydroxide of the present invention will be described, but the present invention is not limited to these examples as long as the present invention does not deviate from the gist of the present invention.

Production of nickel-containing hydroxides of Examples and Comparative Examples

Production of nickel-containing hydroxide of Example 1

An aqueous solution prepared by dissolving nickel sulfate, cobalt sulfate and manganese sulfate in a predetermined molar ratio of nickel: cobalt: manganese, an aqueous solution of ammonium sulfate (ammonium ion donor) and an aqueous solution of sodium hydroxide, were added dropwise to a reaction vessel having a predetermined volume, and continuously stirred by a stirrer equipped with a stirring blade at an agitation power of 1.6 kW/m$^3$ while maintaining a pH of the mixed liquid in the reaction vessel at 11.2 based on a liquid temperature of 40°C and an ammonia concentration at 1.9 g/L. The inside of the reaction vessel had a nitrogen atmosphere. Moreover, the temperature of the mixed liquid in the reaction vessel was maintained at 70°C. A flow rate of the mixed liquid was controlled so that the residence time of the nickel-containing hydroxide particles crystallized by the neutralization reaction was 20 hours in the reaction vessel to start the reaction, then the nickel-containing hydroxide particles were overflowed from an overflow pipe of the reaction vessel and taken out as a suspension of the nickel-containing hydroxide particles. The suspension of the nickel-containing hydroxide particles that was taken out, as described above, by the overflow after the above residence time had passed since the start of the reaction was filtered, washed with an alkaline aqueous solution (8% by mass of an aqueous solution of sodium hydroxide), and subjected to solid-liquid separation. Then, the separated solid phase was washed with water, and further subjected to each treatment of dehydration and drying to obtain a powdery nickel-containing hydroxide.

Production of nickel-containing hydroxide of Example 2

A nickel-containing hydroxide was produced in the same manner as in Example 1 except that an aqueous solution in which the molar ratio of nickel : cobalt: manganese was changed, was used.

Production of nickel-containing hydroxide of Example 3

A nickel-containing hydroxide was produced in the same manner as in Example 2 except that the liquid temperature of the mixed liquid in the reaction vessel was maintained at 72°C and the ammonia concentration was maintained at 2.2 g/L, and the residence time was 14 hours.

Production of nickel-containing hydroxide of Example 4

A nickel-containing hydroxide was produced in the same manner as in Example 1 except that an aqueous solution in which the molar ratio of nickel : cobalt: manganese was changed, was used, the pH of the mixed liquid in the reaction vessel was maintained at 11.3 based on the liquid temperature of 40°C, the ammonia concentration was maintained at 2.5 g/L, and the residence time was 19 hours.

Production of nickel-containing hydroxide of Example 5

A nickel-containing hydroxide was produced in the same manner as in Example 1 except that an aqueous solution in which the molar ratio of nickel: cobalt : manganese was changed, was used, the pH of the mixed liquid in the reaction vessel was maintained at 11.4 based on the liquid temperature of 40°C, and the ammonia concentration was maintained at 2.4 g/L.

Production of nickel-containing hydroxide of Example 6

A nickel-containing hydroxide was produced in the same manner as in Example 5 except that the pH of the mixed liquid in the reaction vessel was maintained at 11.1 based on the liquid temperature of 40°C, the ammonia concentration was maintained at 2.3 g/L, and the residence time was 21 hours.

Production of nickel-containing hydroxide of Example 7

A nickel-containing hydroxide was produced in the same manner as in Example 1 except that an aqueous solution in which the molar ratio of nickel: cobalt : manganese was changed, was used, the pH of the mixed liquid in the reaction vessel was maintained at 11.3 based on the liquid temperature of 40°C, the liquid temperature of the mixed liquid in the reaction vessel was 80°C, the ammonia concentration was maintained at 3.7 g/L, the agitation power was 2.4 kW/m$^3$, and the residence time was 8 hours.

Production of nickel-containing hydroxide of Example 8

A nickel-containing hydroxide was produced in the same manner as in Example 7 except that the pH of the mixed liquid in the reaction vessel was maintained at 11.5 based on the liquid temperature of 40°C, the liquid temperature of the mixed liquid in the reaction vessel was maintained at 70°C, the ammonia concentration was maintained at 4.7 g/L, and the residence time was 7 hours.

Production of nickel-containing hydroxide of Comparative Example 1

A nickel-containing hydroxide was produced in the same manner as in Example 1 except that the pH of the mixed liquid in the reaction vessel was maintained at 11.6 based on the liquid temperature of 40°C, the liquid temperature of the mixed liquid in the reaction vessel was maintained at 55°C, the ammonia concentration was maintained at 4.1 g/L, and the residence time was 9 hours.

Production of nickel-containing hydroxide of Comparative Example 2

A nickel-containing hydroxide was produced in the same manner as in Example 1 except that the pH of the mixed liquid in the reaction vessel was maintained at 11.8 based on the liquid temperature of 40°C, the ammonia concentration was maintained at 6.8 g/L, and the residence time was 9 hours.

Production of nickel-containing hydroxide of Comparative Example 3

A nickel-containing hydroxide was produced in the same manner as in Example 2 except that the pH of the mixed liquid in the reaction vessel was maintained at 10.2 based on the liquid temperature of 40°C, the ammonia concentration was maintained at 0 g/L, and the residence time was 22 hours.

Production of nickel-containing hydroxide of Comparative Example 4

A nickel-containing hydroxide was produced in the same manner as in Example 1 except that an aqueous solution in which the molar ratio of nickel: cobalt : manganese was changed, was used, the pH of the mixed liquid in the reaction vessel was maintained at 11.7 based on the liquid temperature of 40°C, the ammonia concentration was maintained at 3.8 g/L, and the residence time was 19 hours.

Table 1 below shows the neutralization reaction (crystallization) conditions of the nickel-containing hydroxides of Examples and Comparative Examples.

[Table 1]

| | Reaction temperature A | Ammonia concentration B | Residence time C | Agitation power D | pH based on liquid temperature of 40°C | Value of A × B × C × D |
|---|---|---|---|---|---|---|
| Unit | °C | g/L | Time (hour) | kW/m$^3$ | - | - |
| Example 1 | 70 | 1,9 | 20 | 1,6 | 11,2 | 4164 |

(continued)

| | Reaction temperature A | Ammonia concentration B | Residence time C | Agitation power D | pH based on liquid temperature of 40°C | Value of A $\times$ B $\times$ C $\times$ D |
|---|---|---|---|---|---|---|
| Unit | °C | g/L | Time (hour) | kW/m$^3$ | - | - |
| Example 2 | 70 | 1,9 | 20 | 1,6 | 11,2 | 4164 |
| Example 3 | 72 | 2,2 | 14 | 1,6 | 11,2 | 3428 |
| Example 4 | 70 | 2,5 | 19 | 1,6 | 11,3 | 5420 |
| Example 5 | 70 | 2,4 | 20 | 1,6 | 11,4 | 5247 |
| Example 6 | 70 | 2,3 | 21 | 1,6 | 11,1 | 5533 |
| Example 7 | 80 | 3,7 | 8 | 2,4 | 11,3 | 5470 |
| Example 8 | 70 | 4,7 | 7 | 2,4 | 11,5 | 5843 |
| Comparative Example 1 | 55 | 4,1 | 9 | 1,6 | 11,6 | 3399 |
| Comparative Example 2 | 70 | 6,8 | 9 | 1,6 | 11,8 | 7174 |
| Comparative Example 3 | 70 | 0 | 22 | 1,6 | 10,2 | 0 |
| Comparative Example 4 | 70 | 3,8 | 19 | 1,6 | 11,7 | 7956 |

The evaluation items of the physical properties of the nickel-containing hydroxides of Examples and Comparative Examples are as follows.

(1) Composition analysis of nickel-containing hydroxide

Composition analysis was carried out by dissolving the obtained nickel-containing hydroxide in hydrochloric acid and then using an inductively coupled plasma emission spectrometer (Optima 7300DV, manufactured by PerkinElmer Japan Co., Ltd.).

(2) Peak intensity ratio

A peak intensity $\alpha$ of the diffraction peak appearing in the range of $2\Theta = 19.2 \pm 1$ in powder X-ray diffraction measurement using CuK$\alpha$ rays and a peak intensity $\beta$ of the diffraction peak appearing in the range of $2\theta = 38.5 \pm 1$ in powder X-ray diffraction measurement using CuK$\alpha$ rays were measured, respectively. Specifically, the powder X-ray diffraction measurement was carried out by using an X-ray diffractometer (Ultima IV, manufactured by Rigaku Co., Ltd.). Nickel-containing hydroxide powder was charged in a dedicated substrate, and the measurement was carried out by using a CuK$\alpha$ radiation source (40 kV/40 mA) under the conditions of a diffraction angle of $2\Theta = 10°$ to $80°$, a sampling width of $0.03°$, and a scan speed of $20°$/min, to obtain a powder X-ray diffraction pattern. The obtained powder X-ray diffraction pattern was subjected to smoothing processing and background removal processing by using an integrated powder X-ray analysis software PDXL to measure respectively the peak intensity $\alpha$ of the diffraction peak appearing in the range of $2\theta = 19.2 \pm 1$ and the peak intensity $\beta$ of the diffraction peak appearing in the range of $2\theta = 38.5 \pm 1$ from the powder X-ray diffraction patterns, and to calculate the peak intensity ratio $\alpha/\beta$.

(3) Average long diameter of primary particles

A secondary particle image was obtained using a scanning electron microscope (SEM), from the obtained image, secondary particles with a particle diameter having a cumulative volume percentage of 50% by volume when the particle diameter of secondary particles is measured by a particle size distribution measuring apparatus using a laser diffraction/scattering method were selected, 50 primary particles on the surface of the secondary particles were randomly selected, and the long diameters of the primary particles were measured, averaged, and calculated.

(4) Aspect ratio of primary particles

A secondary particle image was obtained using a scanning electron microscope (SEM), from the obtained image, secondary particles with a particle diameter having a cumulative volume percentage of 50% by volume when the particle diameter of secondary particles is measured by a particle size distribution measuring apparatus using a laser diffraction/scattering method were selected, 50 primary particles on the surface of the secondary particles were randomly selected, and long diameters and short diameters of the primary particles were respectively measured and averaged, and calculated by dividing the average long diameter by the average short diameter.

(5) Average secondary particle diameter (D50)

The value was measured with a particle size distribution measuring apparatus (LA-950 manufactured by HORIBA, Ltd.) (the principle was a laser diffraction/scattering method). The measurement conditions were as follows: water was used as a solvent, 1 mL of sodium hexametaphosphate was charged as a dispersant, the transmittance after the sample was charged was set to be in the range of $85 \pm 3\%$, and ultrasonic waves were generated to disperse the sample. Moreover, the solvent refractive index of 1.333 that was a refractive index of water, was used when analyzed.

(6) Tap density

Using a tap denser (KYT-4000 manufactured by Seishin Enterprise Co., Ltd.), a tap density was measured by the constant volume method that is one of the techniques described in JIS R 1628.

(7) Specific surface area (BET specific surface area)

One gram of a nickel composite hydroxide was dried in a nitrogen atmosphere at 105°C for 30 minutes, and then a specific surface area was measured using a specific surface area analyzer (Macsorb manufactured by Mountech Co., Ltd.) by the one-point BET method.

The evaluation results of the physical properties of the nickel-containing hydroxides of Examples and Comparative Examples are shown in Table 2 below.

[Table 2]

|  | Ni | Co | Mn | D50 | Tap density | Specific surface area | Peak intensity ratio ($\alpha/\beta$) | Average long diameters of primary particles | Aspect ratio |
|---|---|---|---|---|---|---|---|---|---|
| Unit | mol% | mol% | mol% | $\mu$m | g/ml | $m^2/g$ | - | nm | - |
| Example 1 | 82 | 12 | 6 | 10,5 | 2,12 | 7,9 | 0,98 | 358 | 3,5 |
| Example 2 | 83 | 12 | 5 | 10,1 | 2,08 | 7,7 | 1,00 | 386 | 4,6 |
| Example 3 | 83 | 12 | 5 | 9,4 | 2,07 | 9,8 | 1,02 | 343 | 4,6 |
| Example 4 | 86 | 9 | 5 | 10,7 | 2,15 | 8,8 | 1,03 | 313 | 4,0 |
| Example 5 | 88 | 9 | 3 | 10,7 | 2,14 | 9,8 | 1,06 | 328 | 3,1 |
| Example 6 | 88 | 9 | 3 | 12,1 | 2,12 | 9,0 | 0,98 | 376 | 3,5 |
| Example 7 | 83 | 12 | 5 | 10,0 | 2,11 | 8,8 | 1,09 | 414 | 3,9 |
| Example 8 | 83 | 12 | 5 | 10,1 | 2,16 | 9,3 | 1,36 | 419 | 4,6 |
| Comparative Example 1 | 82 | 12 | 6 | 9,7 | 2,07 | 22,2 | 1,43 | 141 | 2,9 |
| Comparative Example 2 | 82 | 12 | 6 | 9,2 | 2,25 | 7,1 | 1,60 | 282 | 1,8 |
| Comparative Example 3 | 83 | 12 | 5 | 10,6 | 1,50 | 33,4 | 0,76 | 195 | 5,1 |

(continued)

|  | Ni | Co | Mn | D50 | Tap density | Specific surface area | Peak intensity ratio ($\alpha/\beta$) | Average long diameters of primary particles | Aspect ratio |
|---|---|---|---|---|---|---|---|---|---|
| Unit | mol% | mol% | mol% | $\mu$m | g/ml | m$^2$/g | - | nm | - |
| Comparative Example 4 | 89 | 9 | 2 | 12,5 | 2,18 | 9,5 | 1,39 | 390 | 2,6 |

Production of positive electrode active materials using nickel-containing hydroxides of Examples and Comparative Examples as a precursor

Of the nickel-containing hydroxides of Examples 1 to 8 and Comparative Examples 1 to 4, the nickel-containing hydroxides of Examples 2, 3, 5, 7, 8 and Comparative Examples 1 to 4 were used to produce positive electrode active materials. A lithium hydroxide powder was added to and mixed with the nickel-containing hydroxides of Examples 2, 3, 5, 7, 8 and Comparative Examples 1 to 4 respectively so that the molar ratio of Li/(Ni+Co+Mn ) was 1.05 thereby to obtain a mixed powder of nickel-containing oxide and lithium hydroxide. The obtained mixed powder was subjected to calcination treatment to obtain a lithium metal composite hydroxide to be the positive electrode active material. The calcination conditions included, in an oxygen atmosphere, the calcination temperature of 770°C, the rate of temperature rise of 100°C/h, and the calcination time of 10 hours. Additionally, a box furnace was used for the calcination.

Production of positive plate using the positive electrode active material

A positive plate was produced using the positive electrode active material obtained as described above, and using the produced positive plate, a battery for evaluation was assembled. Specifically, the obtained positive electrode active material, a conductive auxiliary agent (acetylene black), and a binder (polyvinylidene difluoride) were mixed in a weight ratio of 92:5:3 respectively, and the obtained mixture was applied to a positive electrode current collector (Al foil), dried, pressed and fixed to the positive electrode current collector to be a positive plate.

The positive plate obtained as described above, a negative electrode (metal lithium), an electrolytic solution (a mixed liquid obtained by mixing ethylene carbonate : dimethyl carbonate : ethyl methyl carbonate in a volume ratio of 30:35:35) containing an electrolyte ($LiPF_6$), and a separator (made of polypropylene) were loaded to produce a lithium secondary battery.

Evaluation items of the lithium secondary battery

(1) Initial charge-discharge efficiency

Using the produced lithium secondary battery, an initial charge-discharge test was carried out under the following conditions, and the value that is a ratio of an initial discharging capacity to an initial charging capacity and expressed in percentage was defined as the initial charge-discharge efficiency.

<Charge-discharge test conditions>

Test temperature: 25°C

Maximum charging voltage 4.3 V, charging time 6 hours, charging current 0.2 CA, constant current constant voltage charging
Minimum discharging voltage 2.5 V, discharging time 5 hours, discharging current 0.2 CA, constant current discharge
The lithium secondary batteries with an initial charge-discharge efficiency of 85.0 % or more was evaluated as a pass.

(2) 0.2 C Volume capacity density

Using the produced lithium secondary battery, the charge-discharge test was carried out under the following conditions, and the volume capacity density was calculated.

<Charge-discharge test conditions>

Test temperature: 25°C

Maximum charging voltage 4.3 V, charging time 6 hours, charging current 0.2 CA, constant current constant voltage charging

Minimum discharging voltage 2.5 V, discharging time 5 hours, discharging current 0.2 CA, constant current discharge

<Calculation of volume capacity density>

A volume capacity density was determined from the discharge capacity of the positive electrode active material for a lithium secondary battery discharged at 0.2 C and the mass per unit volume of the rolled positive electrode, based on the following formula.

Volume capacity density ($mAh/cm^3$) = discharge capacity (mAh/g) of positive electrode active material for lithium ion battery $\times$ density of rolled positive electrode

The lithium secondary batteries with a volume capacity density of 570 $mAh/cm^3$ or more was evaluated as a pass.

The evaluation results of the lithium secondary batteries are shown in Table 3 below.

[Table 3]

|  | 0.2 C Volume capacity density | Initial charge-discharge efficiency |
|---|---|---|
| Unit | $mAh/cm^3$ | % |
| Example 2 | 578 | 85,4 |
| Example 3 | 579 | 85,5 |
| Example 5 | 629 | 88,6 |
| Example 7 | 601 | 87,3 |
| Example 8 | 584 | 87,8 |
| Comparative Example 1 | 582 | 81,2 |
| Comparative Example 2 | 575 | 83,4 |
| Comparative Example 3 | 560 | 85,2 |
| Comparative Example 4 | 582 | 83,3 |

From Tables 2 and 3, the secondary batteries on which the positive electrode active materials using, as the precursor, the nickel-containing hydroxides of Example 2, 3, 5, 7 and 8 having the peak intensity ratios of $\alpha/\beta$ of 0.80 or more and 1.38 or less were loaded, demonstrated excellent initial charge-discharge efficiency with the initial charge-discharge efficiencies as high as 85.0% or more, and demonstrated high volume capacity densities with volume capacity densities as high as 570 $mAh/cm^3$ or more. Therefore, it was found that when the nickel-containing hydroxides of Examples 1 to 8 having the peak intensity ratios of $\alpha/\beta$ of 0.80 or more and 1.38 or less were used as the precursor, excellent initial charge-discharge efficiency and a high volume capacity density were demonstrated. The nickel-containing hydroxides of Examples 5, 7 and 8 having the peak intensity ratios of $\alpha/\beta$ of 1.05 or more and 1.38 or less particularly had further improved initial charge-discharge efficiency and volume capacity density, when compared with the nickel-containing hydroxides of Examples 2 and 3 that had peak intensity ratios of $\alpha/\beta$ of 1.00 and 1.02.

Additionally, the nickel-containing hydroxides of Examples 1 to 8 had the average long diameters of primary particles in the range of 290 nm or more and 425 nm or less. Moreover, the nickel-containing hydroxides of Examples 1 to 8 had tap densities of 2.07 g/ml or more, the aspect ratios of primary particles of 3.1 to 4.6, and the specific surface areas of 7.7 $m^2/g$ to 9.8 $m^2/g$.

Further, according to Table 1, the nickel-containing hydroxides of Examples 1 to 8 had values of A $\times$ B $\times$ C $\times$ D set to be 3400 or more and 7000 or less, under the reaction conditions of the crystallization step with the reaction temperature A (°C), the complexing agent concentration of the reaction solution B (g/L), the residence time of the nickel-containing hydroxide particles in the reaction vessel C (hour), and the agitation power when mixing the reaction solution in the reaction vessel D (kW/m$^3$).

On the other hand, the secondary batteries on which the positive electrode active materials using, as the precursor, the nickel-containing hydroxides of Comparative Examples 1 to 4 that did not have the constitution wherein the peak intensity ratios of $\alpha/\beta$ were 0.80 or more and 1.38 or less were loaded, had an initial charge-discharge efficiency of less than 85.0% and failed to obtain excellent initial charge-discharge efficiency, or had a volume capacity density at 0.2 C of less than 570 mAh/cm$^3$ and failed to obtain high volume capacity densities. In other words, in Comparative Examples 1 to 4, excellent initial charge-discharge efficiency and high volume capacity density were failed to be compatible.

The nickel-containing hydroxides of Comparative Examples 1 to 4 had values of A × B × C × D of less than 3400 or more than 7000, under the reaction conditions of the crystallization step with the reaction temperature A (°C), the complexing agent concentration of the reaction solution B (g/L), the residence time of the nickel-containing hydroxide particles in the reaction vessel C (hour), and the agitation power when mixing the reaction solution in the reaction vessel D (kW/m$^3$).

Industrial Applicability

When the positive electrode active material that uses the nickel-containing hydroxide of the present invention as the precursor is loaded on a secondary battery, excellent initial charge-discharge efficiency and high volume capacity density can be demonstrated, whereby such a positive electrode active material can be used in a wide range of secondary battery fields such as mobile devices and vehicles.

**Claims**

1.  A nickel-containing hydroxide for a precursor of a positive electrode active material of a non-aqueous electrolyte secondary battery,
    wherein when a peak intensity of a diffraction peak appearing in the range of $2\Theta = 19.2 \pm 1$ in powder X-ray diffraction measurement using CuK$\alpha$ rays is defined as $\alpha$, and a peak intensity of a diffraction peak appearing in the range of $2\Theta = 38.5 \pm 1$ in powder X-ray diffraction measurement using CuK$\alpha$ rays is defined as $\beta$, a peak intensity ratio of $\alpha/\beta$ is 0.80 or more and 1.38 or less.

2.  The nickel-containing hydroxide according to claim 1, wherein the peak intensity ratio of $\alpha/\beta$ is 1.05 or more and 1.38 or less.

3.  The nickel-containing hydroxide according to claim 1 or 2, wherein an average long diameter of primary particles is 290 nm or more and 425 nm or less.

4.  The nickel-containing hydroxide according to any one of claims 1 to 3, wherein an aspect ratio of primary particles is 2.2 or more and 5.0 or less.

5.  The nickel-containing hydroxide according to any one of claims 1 to 4, wherein nickel is contained in 80 mol% or more relative to the total amount of contained metals.

6.  The nickel-containing hydroxide according to any one of claims 1 to 5, wherein the nickel-containing hydroxide is a composite hydroxide comprising nickel and at least one species of metal selected from the group consisting of cobalt and manganese.

7.  The nickel-containing hydroxide according to any one of claims 1 to 6, wherein a tap density is 1.60 or more.

8.  The nickel-containing hydroxide according to any one of claims 1 to 7, wherein a BET specific surface area is 7.5 m$^2$/g or more and 20.0 m$^2$/g or less.

9.  A positive electrode active material of a non-aqueous electrolyte secondary battery, wherein the nickel-containing hydroxide according to any one of claims 1 to 8 is calcined with a lithium compound.

10. A method for producing a nickel-containing hydroxide for a precursor of a positive electrode active material of a non-aqueous electrolyte secondary battery, comprising:

a crystallization step of adding and mixing an aqueous solution containing a nickel salt and an aqueous solution containing a complexing agent in a reaction vessel, and performing coprecipitation reaction in the reaction solution by supplying a pH adjuster to the reaction solution in the reaction vessel so that pH of the reaction solution in the reaction vessel is maintained in the range of 10 or more and 13 or less based on a liquid temperature of 40°C to obtain nickel-containing hydroxide particles; and

when a reaction temperature of the reaction solution in the crystallization step is A (°C), a complexing agent concentration of the reaction solution is B (g/L), residence time of the nickel-containing hydroxide particles in the reaction vessel is C (hour), and an agitation power when mixing the reaction solution in the reaction vessel is D (kW/m$^3$), a value of A $\times$ B $\times$ C $\times$ D is 3400 or more and 7000 or less.

11. The method for producing a nickel-containing hydroxide according to claim 10, wherein the reaction temperature A is 60°C or higher and 90°C or lower.

12. The method for producing a nickel-containing hydroxide according to claim 10 or 11, wherein the complexing agent is an ammonium ion donor, and an ammonium concentration of the reaction solution B is 1.0 g/L or more and 10.0 g/L or less.

13. The method for producing a nickel-containing hydroxide according to any one of claims 10 to 12, wherein the residence time C is 5 hours or longer and 30 hours or shorter.

14. The method for producing a nickel-containing hydroxide according to any one of claims 10 to 13, wherein the agitation power D is 1.0 kW/m$^3$ or more and 5.0 kW/m$^3$ or less.

15. The method for producing a nickel-containing hydroxide according to any one of claims 10 to 14, wherein the reaction vessel is a continuous reactor.

16. The method for producing a nickel-containing hydroxide according to any one of claims 10 to 15, further comprising a solid-liquid separation step of washing the nickel-containing hydroxide particles obtained in the crystallization step with an alkaline aqueous solution and then subjecting the resultant to solid-liquid separation.

## INTERNATIONAL SEARCH REPORT

| International application No. |
| --- |
| **PCT/JP2021/041196** |

| A. | CLASSIFICATION OF SUBJECT MATTER |
| --- | --- |

*C01G 53/00*(2006.01)i; *H01M 4/505*(2010.01)i; *H01M 4/525*(2010.01)i
FI: H01M4/525; H01M4/505; C01G53/00 A

According to International Patent Classification (IPC) or to both national classification and IPC

| B. | FIELDS SEARCHED |
| --- | --- |

Minimum documentation searched (classification system followed by classification symbols)

C01G53/00; H01M4/505; H01M4/525

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2006-265086 A (TOYOTA MOTOR CORP) 05 October 2006 (2006-10-05) | 1, 5-9 |
| | paragraphs [0071]-[0080], tables 1-2, fig. 10 | |
| Y | paragraphs [0071]-[0080], tables 1-2, fig. 10 | 1-2, 5-16 |
| A | paragraphs [0071]-[0080], tables 1-2, fig. 10 | 3-4 |
| X | JP 11-317224 A (MATSUSHITA ELECTRIC IND CO LTD) 16 November 1999 (1999-11-16) | 1-2, 5-7 |
| | claims, paragraph [0067] | |
| A | claims, paragraph [0067] | 3-4 |
| X | JP 2020-102327 A (SUMITOMO CHEMICAL CO) 02 July 2020 (2020-07-02) | 1-2, 5-6 ,9 |
| | claims, paragraphs [0154]-[0165], [0213], tables 1-2 | |
| Y | claims, paragraphs [0154]-[0165], [0213], tables 1-2 | 1-2, 5-16 |
| A | claims, paragraphs [0154]-[0165], [0213], tables 1-2 | 3-4 |
| X | JP 6-340427 A (SUMITOMO METAL MINING CO LTD) 13 December 1994 (1994-12-13) | 1-2, 7-8, 10-11, 15 |
| | claims, paragraphs [0027]-[0028], examples 1-8 | |
| A | claims, paragraphs [0027]-[0028], examples 1-8 | 3-4 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 December 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2021/041196**

### C. DOCUMENTS CONSIDERED TO BE RELEVANT

| Category* | Citation of document, with indication, where appropriate, of the relevant passages | Relevant to claim No. |
|---|---|---|
| X | WO 2012/169274 A1 (SUMITOMO METAL MINING CO LTD) 13 December 2012 (2012-12-13) claims, paragraphs [0221]-[0231], [0244], examples 1, 5 | 1-2, 6-10, 12, 14 |
| Y | claims, paragraphs [0221]-[0231], [0244], examples 1, 5 | 1-2, 5-16 |
| A | claims, paragraphs [0221]-[0231], [0244], examples 1, 5 | 3-4 |
| Y | CN 106745336 A (SHANSHAN ENERGY (NINGXIA) CO., LTD.) 31 May 2017 (2017-05-31) paragraphs [0015]-[0016], [0051]-[0069] | 1-2, 5-16 |
| A | paragraphs [0015]-[0016], [0051]-[0069] | 3-4 |

Form PCT/ISA/210 (second sheet) (January 2015)

## INTERNATIONAL SEARCH REPORT
### Information on patent family members

International application No.

**PCT/JP2021/041196**

| Patent document cited in search report | | | Publication date (day/month/year) | Patent family member(s) | Publication date (day/month/year) |
|---|---|---|---|---|---|
| JP | 2006-265086 | A | 05 October 2006 | (Family: none) | |
| JP | 11-317224 | A | 16 November 1999 | US 6153334 A claims, column 12, lines 18-32 EP 940865 A2 CN 1228621 A | |
| JP | 2020-102327 | A | 02 July 2020 | (Family: none) | |
| JP | 6-340427 | A | 13 December 1994 | (Family: none) | |
| WO | 2012/169274 | A1 | 13 December 2012 | US 2015/0364761 A1 claims, paragraphs [0246]-[0254], [0269], examples 1, 5 EP 2720305 A1 CN 103797623 A KR 10-2014-0060482 A | |
| CN | 106745336 | A | 31 May 2017 | (Family: none) | |

Form PCT/ISA/210 (patent family annex) (January 2015)

**EP 4 276 071 A1**

**Patent documents cited in the description**

- JP 2015003838 A